# EUROPEAN PATENT APPLICATION

(11) **EP 1 676 637 A1**
(43) Date of publication of application: **05.07.2006**
(21) Application number: 05077773.9
(22) Date of filing: 05.12.2005
(51) Int. Cl.: B01J 35/04, B01J 23/40, F01N 3/28, B01D 53/94, B01J 37/02

(54) **Exhaust manifold comprising an aluminide layer on a metallic substrate**

(30) Priority: 29.12.2004 US 25433
(71) Applicant: Delphi Technologies, Inc., Troy, MI 48007 (US)
(72) Inventor: Labarge, William J., Bay City, MI 48706 (US); Anderson, Conrad H., Davidson, MI 48423 (US); Nichols, Robert W., Grand Blanc, MI 48439 (US)
(74) Representative: Denton, Michael John

(57) **Abstract**

In one embodiment, an exhaust manifold (16) can comprise: an exhaust conduit (22) and a catalyst portion disposed within at least a portion of the exhaust conduit (22). The catalyst portion can comprise a metallic substrate, an aluminide layer disposed on at least a portion of the metallic substrate, and a catalyst material disposed on the aluminide. The catalyst material can be selected from the group consisting of platinum, palladium, ruthenium, rhodium, and combinations comprising at least one of the foregoing catalyst materials.

## Description

### BACKGROUND OF THE INVENTION

Known combustion catalysts are usually prepared from a monolithic substrate of ceramic or metal on which a fine layer of catalyst support material consisting of refractory metal oxides, usually aluminum oxide, and promoter oxides, usually rare earth oxides, are deposited.

Catalytic converters containing washcoated substrate are located downstream of the exhaust manifold in what is known to those skilled in the art as underfloor, close coupled or manifold mounted converters. The exhaust gas from a defect free engine contains roughly equivalent amounts of reducing species (carbon monoxide and hydrocarbons) and oxidizing species (nitrogen oxides). The reducing species are preferentially consumed by chemical reduction of the oxidizing species, resulting in exhaust emissions below established Federal and State limits. However, vehicles that have degraded fuel control, e.g., heavily aged vehicles and/or vehicles having used poor quality fuels, may emit much more reducing species than oxidizing species. Exothermic combustion of high concentrations of reducing species may lead to premature deactivation of the catalytic converter before the vehicle reaches the required 125,000 mile durability. Prevention of the excess hydrocarbon from reaching the underfloor catalytic converter is greatly preferred.

During the combustion of exhaust gas catalytic converters are often subjected to exhaust gas temperatures reaching 800°C and higher. Exothermic combustion reactions often increase the 800°C exhaust gas temperature to above 1,050°C on the catalyst bed. As vehicles age and fuel control worsens, catalyst bed temperatures may exceed 1,200°C. In particular, thermal cycling of combustion catalysts above 1,100°C degrades the low temperature catalytic activity. Possible causes for the degradation of low temperature performance include sintering of the catalyst support, catalyst erosion, and vaporization and encapsulation of the active precious metal phase(s). For example, catalyst beds that have reached more than 1,100°C very often do not begin catalytic combustion until exhaust temperatures reach above about 450°C. Since the exhaust stream is at or below 500°C for a significant amount of time, the amount of pollutants emitted greatly increases when the low temperature combustion activity lost.

There remains a need for improved exhaust treatment devices, systems, and methods.

### SUMMARY OF THE INVENTION

Disclosed herein are exhaust manifolds comprising a catalyst portion, and methods of making and using the same. In one embodiment, an exhaust manifold can comprise: an exhaust conduit and a catalyst portion disposed within at least a portion of the exhaust conduit. The catalyst portion can comprise a metallic substrate, an aluminide layer disposed on at least a portion of the metallic substrate, and a catalyst material disposed on the aluminide. The catalyst material can be selected from the group consisting of platinum, palladium, ruthenium, rhodium, and combinations comprising at least one of the foregoing catalyst materials.

In one embodiment, the method for making a catalyzed exhaust manifold can comprise forming a catalyst portion by forming an aluminide on at least a portion of a metallic substrate, and disposing the catalyst portion within a conduit of the exhaust manifold. The catalyst portion can comprise a catalyst material selected from the group consisting of platinum, palladium, ruthenium, rhodium, and combinations comprising at least one of the foregoing catalyst materials.

The above-described and other features are exemplified by the following figures and detailed description.

### BRIEF DESCRIPTION OF THE DRAWINGS

Refer now to the figures, which are meant to be exemplary, not limiting, and wherein like elements is numbered alike.
Figure 1 is a diagram of an exemplary exhaust gas re-circulation (EGR) system.
Figure 2 is a view of an exemplary spiral wound metal substrate.
Figure 3 is a view of an exemplary flat metal substrate with herringbone pattern.
Figure 4 is a frontal view of an exemplary manifold with manifold mounted converter.
Figure 5 is a frontal view of an exemplary manifold with manifold mounted converter.

### DESCRIPTION OF THE PREFERRED EMBODIMENT

It is noted that the terms "first," "second," and the like, herein do not denote any amount, order, or importance, but rather are used to distinguish one element from another, and the terms "a" and "an" herein do not denote a limitation of quantity, but rather denote the presence of at least one of the referenced item. Additionally, all ranges disclosed herein are inclusive and combinable (e.g., the ranges of "up to 25 wt%, with 5 wt% to 20 wt% desired," are inclusive of the endpoints and all intermediate values of the ranges of "5 wt% to 25 wt%," etc.). As used herein the term "about", when used in conjunction with a number in a numerical range, is defined being as within one standard deviation of the number "about" modifies.

In order to inhibit sintering and limit the drop in the specific surface area of the downstream catalyst, the exhaust manifold can comprise a catalyst for hydrocarbon combustion. Specifically, a catalyzed aluminide on a support can be disposed in the exhaust manifold conduit, and, optionally an aluminide layer can be disposed (e.g., grown) on the exhaust manifold (e.g., on the inside walls thereof). If an aluminide layer is formed on the conduit inner surface, desirably, the aluminide coating does not impede heat transfer from the exhaust gas to the manifold, therefore, it does not insulate the conduit. Insulation could prevent heat loss through the conduit to the environment and increase the thermal deactivation of the downstream catalytic converter.

For example, a catalyzed aluminide coating has been demonstrated effective for combustion of most of the hydrocarbons emitted due to a single clogged fuel injector. A single clogged fuel injector only increases the amount of hydrocarbon exhausted from one individual cylinder. After the exhausted hydrocarbon stream comes out of an exhaust port, it travels several inches through a small conduit that contains only the exhaust from one engine cylinder. Downstream, (e.g., often at about six inches or so from the exhaust port of the engine cylinder), all the individual conduits are combined into one larger conduit in the combined conduit (collectively known as an exhaust manifold).

Disclosed herein is an exhaust manifold housing a metallic substrate comprising an aluminide disposed thereon (e.g., on all or a portion of the surface of the metallic substrate) and optionally an inner surface of the exhaust manifold with an aluminide, e.g., an aluminide scale, on at least a portion of an inner surface of the conduit. Optionally, an active catalyst material disposed at the aluminide scale. In one embodiment, the exhaust manifold can comprise a catalyst portion comprising an aluminide on a metallic substrate surface with a catalyst material. The active catalyst material can be a supported catalyst (e.g., an active catalyst material that was disposed on a support prior to disposing it at the aluminide scale), an unsupported catalyst (e.g., an active catalyst material disposed directly onto the aluminide scale, and/or an active catalyst material disposed onto a support that has been disposed on the aluminide scale). The exhaust manifold can optionally comprise a retention material between the metal substrate (e.g., foil) and the manifold conduit.

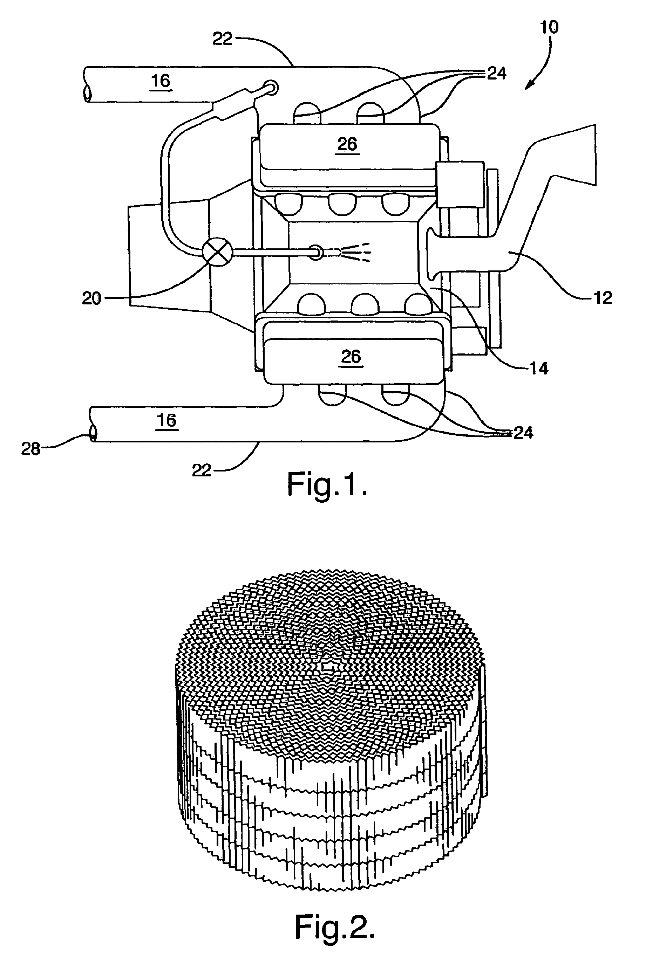

An exemplary exhaust gas re-circulation (EGR) system 10 is depicted in Figure 1. The EGR system 10 generally includes an air inlet tube 12, an intake manifold 14, an exhaust manifold 16, an optional passageway 18 connected between the exhaust manifold 16 and the intake manifold 14, and an EGR valve 20 is interposed in the passageway 18 for controlling re-circulation of exhaust gas into the intake manifold 14. The exemplary exhaust gas manifold 16 comprises combined manifold conduit 22. The combined manifold conduit 22 comprises individual manifold branches 24 that mount the exhaust manifold 16 to an exhaust side of an engine cylinder head 26.

The combined manifold conduit 22 and individual manifold branches 24 can comprise any material capable of withstanding the exhaust temperatures and conditions (e.g., regular operating temperatures of about 400°C to about 800°C, and exposure to exhaust constituents (e.g., hydrocarbons (HC), carbon monoxide (CO), carbon dioxide (CO₂), nitrogen oxides (NOx), water (H₂O), sulfur oxides (SOx), particulate matter (e.g., soot, and the like), and the like)). Although some ferritic stainless steels can be employed, due to the consistent high temperatures, cast metal (e.g., cast iron, and the like) is generally desired.

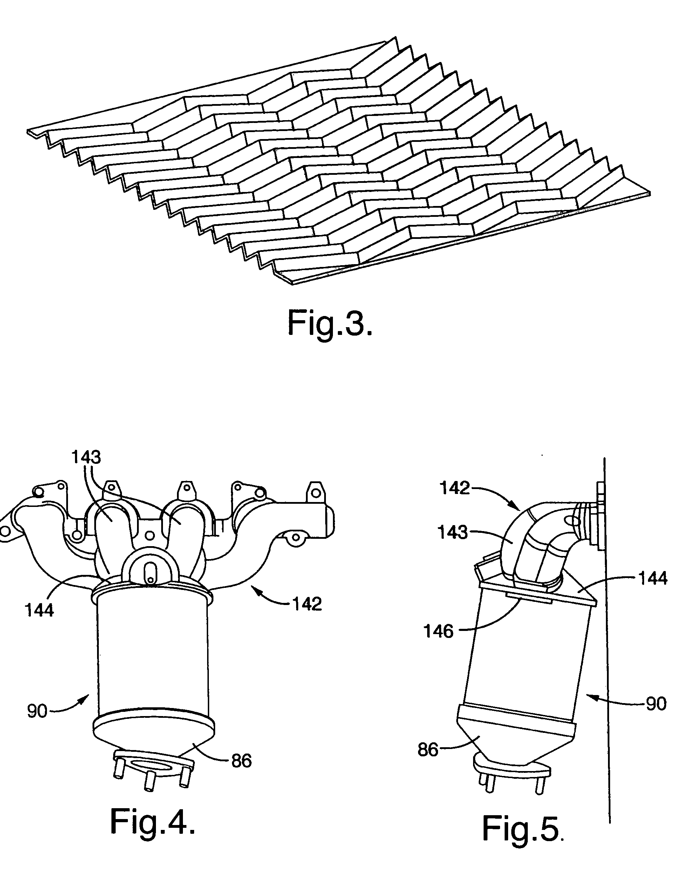

Referring now to Figures 4 and 5, exhaust manifolds are shown. An exhaust manifold 140, as shown in a front view in Figure 4 and a side view in Figure 5, is designed to collect exhaust gases exiting the cylinders of an engine. Exhaust manifold 140 comprises a collection of pipes or conduits, whose number corresponds with the number of cylinders in the engine, which upon exiting the engine compartment, are bent and directed to a single conduit 144 leading to a catalytic converter 142, and then to an exhaust pipe. An exhaust manifold collector body 144 having a plurality of pipes or runners 148 can place exhaust manifold 140 in contact with catalytic converter 142 creates a manifold/converter.

Disposed within the combined conduit(s) and/or branch(es) can optionally be the catalyst portion. The catalyst portion can be an active catalyst material disposed on and/or in (referred to herein as "on") an aluminide scale on a metal substrate (e.g., metal foil, or the like; see Figures 2 - 3). The combined manifold conduit 22, individual manifold branches 24, and metal substrate, can comprise any material capable of withstanding the exhaust temperatures and conditions (e.g., regular operating temperatures of about 400°C to about 800°C, and exposure to exhaust constituents (e.g., hydrocarbons (HC), carbon monoxide (CO), carbon dioxide (CO₂), nitrogen oxides (NOx), water (H₂O), sulfur oxides (SOx), particulate matter (e.g., soot, and the like), and the like)). Although some ferritic stainless steels can be employed, due to the consistently high temperatures, cast metal (e.g., cast iron, and the like) is generally desired, e.g., iron cast with carbon and/or aluminum, and the like.

These metal substrate can have various geometries that are compatible with the conduit; e.g., in the form of foils, preform, mat, fibrous material, monoliths (e.g., a honeycomb structure, and the like), other porous structures, and combinations comprising at least one of the foregoing forms, with metal foils particularly desirable within the exhaust manifold. For example, the metal substrate geometry can be flat (e.g., one or more flat, stacked, substrate(s)), spiral wound, folded, and so forth. Figures 2 and 3 are exemplary metal substrate designs. Figure 2 illustrates a spiral wound metal substrate, while Figure 3 illustrates a flat metal substrate having a herringbone design.

Disposed on the metal substrate and optionally on all or a portion of an interior surface of the individual manifold branch(es) 140 and/or the combined manifold conduit 144 is an aluminide that is catalytic for combustion of hydrocarbons. The catalytic aluminide comprises as the catalytic element platinum, rhodium, palladium, ruthenium, and combinations comprising at least one of the foregoing, or, more specifically, platinum aluminide and optionally, rhodium aluminide, palladium aluminide, ruthenium aluminide, and combinations comprising at least one of the foregoing.

The catalytic aluminide can optionally comprise the catalytic element disposed on an aluminide, such as platinum metal disposed upon pure aluminide scale. The catalytic aluminide can optionally comprise the catalytic element disposed on an intermetallic aluminide such as platinum metal disposed upon iron aluminide. The aluminide scale can be derived from aluminum contained within the metallurgical content of the metal substrate (or conduit if disposed thereon) and/or can be formed from aluminum deposited onto the metal substrate (and optionally the conduit). Aluminum may be disposed by any number of techniques. Despite the technique, however, prior to disposing the aluminum metal, the surface to receive the aluminum can optionally be prepared. For example, a cast iron manifold may be cleaned by sand blasting the surface with 400 grit, SiC abrasive.

The exposed aluminide surface does not have to have the same concentration of catalytic element throughout. For example, at the exhaust gas-aluminide interface, the aluminum concentration can be less than or equal to about 16 wt%, while at the substrate-aluminide interface the aluminum concentration can be greater than or equal to about 72 wt%. Low aluminum concentration at the gas phase interface allows good catalytic oxidation. High aluminum concentration at the substrate interface allows good aluminide adhesion and durability.

To further enhance the adhesion of catalytic aluminide to the substrate, it is desirable to dispose a small amount of aluminum intermetallic compound at the interface between the substrate and the aluminide. Possible aluminum intermetallics include aluminum combined with additional material(s), such as nickel (nickel-aluminide), iron (iron-aluminide), titanium (titanium aluminide), niobium (niobium aluminide), and the like, and combinations comprising at least one of the foregoing additional materials.

To further enhance the catalytic activity of the catalytic aluminide, additional catalytic material(s) may be present in a non-aluminide form. Preferably the additional catalytic materials comprise platinum, palladium, rhodium, ruthenium, and the like, and combinations comprising at least one of the foregoing additional catalytic material(s). The inclusion of platinum is particularly desirable. For example, a platinum aluminide scale can be additionally activated with platinum metal deposited over the platinum aluminide layer.

The amount of additional catalytic material(s) can be an amount sufficient to be catalytically active at temperatures above about 325°C. For example, when the additional catalytic material(s) are platinum and/or rhodium, the total platinum and/or rhodium concentration can be about 0.4 wt% to about 2.0 wt%, based upon the total weight of the platinum(rhodium) and platinum aluminide. When the additional catalytic material(s) are palladium and/or ruthenium, the palladium and/or ruthenium concentration can be about 2.0 wt% to about 8.0 wt%, based upon the total weight of the palladium(ruthenium) and platinum aluminide. Where the active aluminide material includes additional catalytic material(s), the additional catalytic material(s) can form a coating on the aluminide scale having a thickness of about 0.2 micrometers (µm) to about 8.0 µm, or, more specifically, about 0.2 µm to about 3.0 µm, or, even more specifically, about 0.2 µm to about 0.6 µm.

In addition to the active catalyst material(s), other catalyst component(s) can optionally be employed, including, catalyst support(s), promoter oxide(s) (such as rare earths oxides), binder(s) (such as aluminum diacetate hydroxide, zirconium acetate, and so forth), stabilizer(s), metal phosphate(s), and the like, as well as combinations comprising at least one of the foregoing. Exemplary catalyst support(s) include metal oxides (e.g., aluminum oxide), hexaaluminates (which may optionally be stabilized), metal aluminates, metal phosphates, and combinations comprising at least one of the foregoing. Exemplary stabilizer(s) include barium oxide, scandium oxide, lanthanum oxide, vanadium oxide, zirconium oxide, titanium oxide, magnesium oxide, and the like, as well as combinations comprising at least one of the foregoing oxides. Exemplary metal phosphates include zirconium phosphate, aluminum phosphate, lanthanum phosphate, vanadium phosphate, titanium phosphate, magnesium phosphate, and the like, as well as combinations comprising at least one of the foregoing phosphates. Exemplary binder(s) include nitrate(s), phosphate(s), hydroxide(s), and so forth, of aluminum, zirconium, titanium, barium, strontium, magnesium, and the like, and combinations comprising at least one of the foregoing binders.

The aluminum intermetallic can be prepared prior to disposing (e.g., depositing), it on the substrate. Here, the aluminum intermetallic can be prepared by combining aluminum powder and the additional metal powder(s). For example nickel (Ni) and aluminum (Al) powders can be ball milled together to form an alloy comprising about 28 atomic percent (at.%) Ni and 72 at.% Al. After preparing the aluminum intermetallic, the aluminum intermetallic can be applied to the conduit as a powder forming an aluminum intermetallic-coated conduit. The aluminum intermetallic may be applied by any operable technique, e.g., slurry coating, electrostatic powder deposition, reaction synthesis processing, physical vapor deposition, chemical vapor deposition, electroplating, and the like. The intermetallic alloy/substrate may be heated in various atmospheres to aid in the inter-diffusion of the alloy into the substrate. Preferably, after heat cycling to greater than or equal to about 650°C, an oxidized intermetallic (such as nickel aluminide) forms at the substrate. A preferred intermetallic comprises a nickel-aluminide layer having a thickness of about 1 micrometers (µm) to about 3 µm.

Once the aluminum is disposed at the substrate (e.g., in the form of aluminum and/or an aluminum intermetallic), and/or if the aluminum is derived from the substrate, the aluminide scale can be formed. Forming the aluminide scale comprises annealing (e.g., diffusion annealing in, for example, a reducing or neutral atmosphere) to form a bond with the substrate surface. Diffusion annealing can be accomplished, for example, by heating in a dry, inert (e.g., argon) atmosphere with moisture levels of less than or equal to about 10 parts per million by weight (ppm), and then cooling to room temperature. Desirably, the annealing temperature is about 600°C to about 1,000°C, or, more specifically, about 700°C to about 950°C, and, even more specifically, about 750°C to about 850°C. Diffusion annealing times can be about 10 minutes to about 240 minutes, or, more specifically, about 30 minutes to about 160 minutes, and, even more specifically, about 50 minutes to about 80 minutes. After annealing, the aluminum can be oxidized with air and moisture to form the aluminide scale, e.g., with the intermetallic element(s) desirably stabilizing the aluminide grain boundaries. Desirably, the oven ramp rate is controlled to obtain a substantially uniform, crack-free aluminide coating. For example, the oven ramp can be less than or equal to about 5°C/minute, or, more specifically, about 3°C/minute.

If the aluminum is derived from the substrate, optionally, the aluminum surface layer can be alloyed with additional metal(s) to forming an aluminum intermetallic. In particular, it is desirable that the metal substrate be cast from an iron-aluminum intermetallic alloy, thereby forming a cast iron-aluminide substrate; e.g., about 83.8 at.% iron, 16.0 at.% aluminum, and 0.2 at.% carbon, based upon the total atomic percent of the manifold. The addition of carbon allows precipitation of two phases of intermetallic, e.g. iron aluminide and iron-aluminum-carbide. It has been found that the dual phase substrate (e.g., iron-aluminide substrate) is more robust to failure than the single phase (e.g., iron-aluminide) substrate.

The aluminum oxide scale layer can then doped with an additional (e.g., catalytic) material(s) such as platinum, rhodium, palladium, ruthenium, or a combination comprising at least one of the foregoing materials. Preferably, the iron-aluminide substrate doped with additional metal is diffusion annealed and re-oxidized. The diffusion annealing allows diffusion of the additional metal (e.g. platinum) from the surface of the aluminide scale into the depth of the aluminide scale. The aluminide scale prevents the catalytic material, (e.g., platinum), from aggregating into large inactive grains. However, it is not necessary that all the additional metal be converted to an aluminide phase. For example, the existence of platinum metal particles dispersed throughout a platinum-aluminide matrix is an acceptable outcome of the diffusion annealing and oxidation process. In general, the doping element comprises, on average, an amount of from about 1.5 wt% to about 7.5 wt% of the aluminide scale wherein weight percent is based on the total weight of the aluminide scale including the additional doping element.

The additional catalytic material(s) can be disposed on the substrate so as to form a concentration gradient. For example, the aluminide scale layer on the substrate can comprise primarily aluminum oxide at the substrate-scale interface and primarily additional catalytic material(s) (e.g., platinum) at the scale surface exposed to exhaust gasses. The concentration of additional material(s) at the manifold-aluminide interface can be, on average, an amount of about 0.1 wt% to about 8 wt% additional material(s), wherein weight percent is based on the total dry weight of the aluminum and additional material(s), or, more specifically, about 1 wt% to about 6 wt%, or, even more specifically, about 2 wt% to about 3 wt%. Additionally, the concentration of the additional material(s) at the exposed aluminide scale surface can be, on average, about 0.1 wt% to about 38 wt%, based upon the total dry weight of aluminide and additional material(s) at the exposed surface, or, more specifically, about 8 wt% to about 30 wt%, or, even more specifically, about 11 wt% to about 26 wt%, and, yet more specifically, about 14 wt% to about 18 wt%.

Although the amount of additional catalytic material(s)disposed on the substrate surface according to either of the above disclosed methods can vary depending on the amounts of aluminum and additional metals used, the type of substrate onto which the aluminum and additional metals are deposed, and on the method of deposition, in general the preferred aluminide scale can have a thickness of about 200 nanometers (nm) to about 3,000 nm, or, more specifically, about 300 nm to about 2,000 nm, and, even more specifically, about 400 nm to about 1,000 nm.

The additional catalytic material(s) can be applied to the aluminide scale via various techniques, such as chemical vapor deposition, liquid phase impregnation, slurry coating, inking, and the like, as well as combinations comprising at least one of the foregoing. For example, the additional catalytic material(s) can comprise a solution (desirably a weak basic solution), such that acidity of the slurry will not attack the interface between the substrate and the aluminide scale. The solution may contain an inorganic hydroxide (such as platinum hydroxide), an inorganic ammine (such as platinum diammine), an organometallic (such as platinum 2-ethylhexaanoate), an oxide (such as platinum oxide), a sulfide (such as platinum sulfide), and the like, as well as combinations comprising at least one of the foregoing, with the employment of platinum ammine hydroxide desirable. The additional catalytic metal (desirably, uniformly) coats the portion of the substrate that exhaust gas comes into contact with. The catalytic metal can have a thickness of about 50 nanometers (nm) to about 500 nm, or, more specifically, about 80 nm to about 300 nm, and, even more specifically, about 80 nm to about 120 nm.

The pH of the additional catalytic material(s) as a solution or slurry is preferably about 7.2 to about 11, or, more specifically, about 8 to about 10, and, even more specifically, about 8.4 to about 9.4. The pH of the slurry can be adjusted as by addition of an acid or base, as is desirable, such as by the addition of tetramethyl ammonium hydroxide (TMAH) and/or acetic acid (HAc).

Once the pH has been adjusted, the additional catalytic material(s) can be applied to at least a portion of the aluminide scale. For example, aluminide scaled substrate can be dipped into the slurry, and the excess slurry can be cleared, e.g., such as by vacuum and/or air (e.g. air knife). Alternatively, the coating can be applied to the catalyst support by a variety of techniques, including immersion, spraying, painting, and the like (e.g.. spraying catalyst upon aluminide scaled metal foil). The amount of coating applied can vary depending upon the physical and chemical properties of the slurry, such as viscosity and pH, as well as the withdrawal rate.

Following the catalytic material coating process, the catalytic material/aluminide scale/substrate can be dried and calcined at a temperature sufficient to bum off reducing material. For example, at temperatures of about 550°C to about 1,000°C, or, more specifically, about 620°C to about 650°C, for up to about 4 hours. An exemplary catalyst includes a cast iron-aluminide substrate that has a platinum aluminide scale layer, and a doping of platinum metal.

Desirably, the calcined layer of the additional catalytic material(s) deposited by slurry, exhibits less than or equal to about 10 wt% erosion (based upon the total calcined weight of the slurry prior to any erosion), for greater than or equal to about 2,000 engine hours, or, more specifically greater than or equal to about 3,000 engine hours, and even more specifically, greater than or equal to about 4,000 engine hours. More desirably, the calcined layer exhibits less than or equal to about 30 wt% erosion (based upon the total calcined weight of the slurry prior to any erosion) for greater than or equal to about 4,000 engine hours, or, more specifically, less than or equal to about 20 wt% erosion for greater than or equal to about 4,000 engine hours, and even more specifically, less than or equal to about 10 wt% erosion for greater than or equal to about 4,000 engine hours.

Optionally disposed within the conduit 22 can be a barrier 28. The barrier 28 can be disposed downstream from the engine cylinder head 26 (wherein downstream refers to the direction of an exhaust gas flow), and/or can engage the catalyst portion. The barrier 28 can be any component capable of allowing fluid communication through and out of the conduit 22 while retaining the catalyst portion within the desired portion of the conduit 22, e.g., such that the catalyst portion is not forced out of the manifold 16 by the flow of exhaust gas from the engine. For example, the barrier 28 can be a mesh, screen, shelve, clip, protrusion (e.g., from (and/or through) the inner wall of the conduit 22, such as a rivet protruding into the conduit 22), an area of decreased diameter (e.g., having a diameter smaller than a catalyst portion diameter), a crimped area, and the like, as well as combinations comprising at least one of the foregoing.

It is noted that the catalyzed aluminide scale can also optionally be disposed on an inner surface of the manifold, e.g., in the combined conduit and/or in individual branch(es). The deposition process, as well as the materials and concentrations can be the same as those described above in relation to the metal substrate housed within the exhaust manifold (e.g., within the combined conduit).

The following examples are meant to be illustrative, not limiting.

### EXAMPLES

### Example 1: An uncoated exhaust manifold

An exhaust manifold is metal cast from a molten iron and carbon. Upon cooling, the metal cast manifold comprises a single precipitated intermetallic, i.e., iron-carbide. A 4.66 inch (11.8 centimeter (cm)) round cordierite substrate was washcoated with a 3.6 g/in³ (0.22 g/cm³) loading comprising 3.0 wt.% lanthanum stabilized gamma-delta aluminum oxide. The lanthanum stabilized gamma-delta aluminum oxide catalyst was calcined in air at 600°C for 4 hours. The calcined washcoated substrate was subsequently impregnated with a precious metal loading of 0.174 g/in³ (0.012 g/cm³) palladium nitrate. The palladium-aluminum oxide catalyst was calcined in air at 600°C for 4 hours.

The 4.66 inch round catalytic substrate was placed in a converter shell and the catalytic converter was welded into the exhaust stream at a location four inches downstream of the manifold outlet. The manifold/catalytic converter assembly underwent 100 hours accelerated engine aging with aging performed on a gasoline engine dynamometer. The catalyst bed temperature averaging about 925°C with a peak temperature of about 1,060°C. After dynamometer aging, the catalysts were evaluated on a vehicle using the standard North American Federal Test Procedure (FTP) driving cycle and the engine out and cumulative tail pipe emissions were measured. The percent conversions (e.g., percent (%) hydrocarbon (HC) conversion) were calculated from the engine out and tailpipe emissions. It was noted that there was no aluminide present on the inner surface of the manifold, even after the 100 hours of accelerated engine aging.

### Example 2: Nickel Aluminide on a Metallic Substrate

A 2.3 micrometer coating of nickel was plasma vapor deposition (PVD) deposited using magnetron sputtering upon an Fe-Cr-Y-Al alloy comprising 88.7 wt% iron, 15 wt% chromium, 0.3 wt% yttrium, and 6 wt% aluminum. The ratio of nickel to aluminum at the substrate surface was 46 at% aluminum and 54 at% nickel, forming primarily beta nickel aluminum (NiAl). The nickel coated alloy is heated to 875°C for 10 minutes while exposed to a gas containing 3 volume percent (vol.%) hydrogen and 97 vol.% nitrogen. Thereafter, the annealed foil is heated in an air atmosphere at a temperature of 875°C for eight hours. The metal alloy with beta nickel aluminide layer was wound into metal substrates 3 inches in diameter and 1 inch in thickness. A 3 wt% barium hexaaluminate powder with surface area of 83 m²/g was mixed with 8.2 wt% zirconium acetate and water, making a catalyst slurry containing 46 wt% solids. The substrate (comprising the annealed metal alloy with platinum aluminide layer) was coated with 2.8 g/in³ slurry. The monolith with washcoat was calcined at 500°C for 4 hours. The finished monoliths had a washcoat of 1.31 g/in³ barium hexaaluminate and 0.52 g/in³ zirconium oxide. The barium hexaaluminate, zirconium oxide coated platinum aluminide substrate was doped with 35 g/ft³ palladium from palladium nitrate, and 35 g/ft³ rhodium from rhodium nitrate and calcined at 500°C for 4 hours.

### Example 3: Platinum Aluminide on Metallic Substrate

A 4 milligram per cubic centimeter (mg/cm³) coating of platinum oxide is deposited upon an Fe-Cr-Y-Al alloy comprising 88.7 wt% iron, 15 wt% chromium, 0.3 wt% yttrium, and 6 wt% aluminum. The platinum oxide coated alloy is heated to 875°C for 10 minutes while exposed to a gas containing 3 vol.% hydrogen and 97 vol.% nitrogen. Thereafter, the annealed foil is heated in an air atmosphere at a temperature of 875°C for eight hours. The annealed metal alloy with platinum aluminide layer was wound into metal substrates 3 inches in diameter and 1 inch in thickness. A 3 wt% barium hexaaluminate powder with surface area of 83 m²/g was mixed with 8.2 wt% zirconium acetate and water, making a catalyst slurry containing 46 wt% solids. The substrate (comprising the annealed metal alloy with platinum aluminide layer) was coated with 2.8 g/in³ of slurry and was calcined at 500°C for 4 hours.

### Example 4: Palladium Ruthenium Oxide on Aluminide on Metallic Substrate

A Fe-Cr-Y-Al alloy with 88.7 wt% iron, 15 wt% chromium, 0.3 wt% yttrium, and 6 wt% aluminum is heated to 875°C to 925°C for a duration of 10 minutes while exposed to a gas containing 3 vol.% hydrogen and 97 vol.% nitrogen. Thereafter, the annealed foil is heated in an oxygen-rich atmosphere, preferably air, at a temperature of 870°C for eight hours. The annealed metal alloy with aluminide layer was wound into metal substrates 3 inches in diameter and 1 inch in thickness. The pure aluminum oxide aluminide and substrate were doped with 35 g/ft³ palladium from palladium nitrate, and 120 g/ft³ rhodium from rhodium nitrate, and were calcined at 500°C for 4 hours.

The aluminide scale formed according to the above disclosure, serves to improve catalytic material adhesion to the substrate (and to the conduit), thereby minimizing catalytic material erosion losses during the lifetime of a exhaust manifold. Not to be limited by theory, it is believed that the intermetallic aluminide scale serves to inhibit and slow aluminide grain growth, and corrosion and oxidation damage at the surface of the substrate.

A primary measurement of a successful catalyst is that, after extended aging, the catalyst is still able to minimize polluting species below desired thresholds. Catalysts have not been included in the exhaust manifold 22 because of erosion of the catalyst materials and subsequent loss of catalyst activity during aging. The aluminide scale disclosed herein provides a layer that has increased anchoring and reduced erosion of active catalyst materials allowing reduced loadings of active catalyst materials, e.g., thinner layers of platinum enabling cost reductions.

The aluminide scale and substrate have intimate bonding that exceeds the bonding typical between a catalyst and substrate. The additional catalytic materials are more strongly bonded to an aluminide coating than upon a substrate. Alternatively, in the absence of a catalyst support, the catalyst metals are deposited directly upon the aluminide scale layer. The catalyst metals are more strongly bonded to an aluminide coating than upon a substrate.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An exhaust manifold (16), comprising:
an exhaust conduit (22);
a catalyst portion disposed within at least a portion of the exhaust conduit (22), the catalyst portion comprising
a metallic substrate;
an aluminide layer disposed on at least a portion of the metallic substrate; and
a catalyst material disposed on the aluminide, wherein the catalyst material is selected from the group consisting of platinum, palladium, ruthenium, rhodium, and combinations comprising at least one of the foregoing catalyst materials.

2. The exhaust manifold (16) of Claim 1, wherein said metallic substrate comprises a metallic foil.

3. The exhaust manifold (16) of Claim 1, wherein the aluminide layer was formed from an aluminum intermetallic, and wherein the aluminum intermetallic comprised about 2 wt% to about 8 wt% of an additional material, based upon a total weight of the aluminum intermetallic, wherein the additional material is selected from the group consisting of as nickel, iron, titanium, niobium, and combinations comprising at least one of the foregoing additional materials.

4. The exhaust manifold (16) of Claim 1, wherein the catalyst material is present in an amount of about 5 g/ft³ to about 100 g/ft³.

5. The exhaust manifold (16) of Claim 1, wherein the aluminide layer has a thickness of about 200 nm to about 3,000 nm.

6. The exhaust manifold (16) of Claim 5, wherein the thickness is about 300 nm to about 2,000 nm.

7. The exhaust manifold (16) of Claim 6, wherein the thickness is about 400 nm to about 1,000 nm.

8. The exhaust manifold (16) of Claim 1, wherein the catalyst portion further comprises a catalyst support selected from the group consisting of hexaaluminate, metal aluminate, metal phosphate, and combinations comprising at least one of the foregoing catalyst supports.

9. The exhaust manifold (16) of Claim 1, wherein the catalyst portion further comprises a stabilizer selected from the group consisting of barium oxide, scandium oxide, lanthanum oxide, vanadium oxide, zirconium oxide, titanium oxide, magnesium oxide, and combinations comprising at least one of the foregoing stabilizers.

10. The exhaust manifold (16) of Claim 1, wherein the catalyst portion further comprises a stabilizer selected from the group consisting of scandium oxide, vanadium oxide, zirconium oxide, titanium oxide, magnesium oxide, and combinations comprising at least one of the foregoing stabilizers.

11. The exhaust manifold (16) of Claim 1, wherein the catalyst portion further comprises a binder selected from the group consisting of nitrate, phosphate, hydroxide, and combinations comprising at least one of the foregoing binders.

12. The exhaust manifold (16) of Claim 1, further comprising a barrier (28) disposed in the conduit (22), wherein the barrier (28) is capable of inhibiting passage of the catalyst portion out of the conduit (22).

13. The exhaust manifold (16) of Claim 1, wherein the exhaust conduit (22) has an inner surface and further comprising a conduit (22) aluminide layer is disposed on at least a portion of the inner surface.

14. The exhaust manifold (16) of Claim 13, wherein the conduit (22) aluminide layer is disposed in a branch of the manifold.

15. A method for making a catalyzed exhaust manifold (16), comprising:
forming a catalyst portion by forming an aluminide on at least a portion of a metallic substrate, wherein the catalyst portion comprises a catalyst material selected from the group consisting of platinum, palladium, ruthenium, rhodium, and combinations comprising at least one of the foregoing catalyst materials; and
disposing the catalyst portion within a conduit (22) of the exhaust manifold (16).

16. The method of Claim 15, wherein forming the aluminide scale further comprises forming an aluminum intermetallic comprising:
combining an aluminum and an additional metal wherein said additional metal is selected from the group consisting of nickel, iron, titanium, copper, barium, strontium, calcium, silver, gold, platinum, and combinations comprising at least one of the foregoing;
applying said aluminum intermetallic to the metallic substrate to form an aluminum intermetallic-coated substrate; and
oxidizing and annealing said aluminum intermetallic-coated substrate.

17. The method of Claim 16, wherein said additional metal is selected from the group consisting of nickel, iron, titanium, and combinations comprising at least one of the foregoing additional metals.

18. The method of Claim 16, further comprising contacting the aluminide with a washcoat comprising the catalytic material and/or a precursor thereof.

19. The method of Claim 18, wherein said washcoat comprises a pH of about pH of about 7.2 to about 11.

20. The method of Claim 18, wherein the pH is about 8 to about 10.
